Europäisches Patentamt

European Patent Office

Office européen des brevets

(11) Publication number: **0 237 617**
**A1**

## (12) EUROPEAN PATENT APPLICATION

(21) Application number: **86113434.4**

(51) Int. Cl.⁴: **F16D 1/06** , F16B 21/00

(22) Date of filing: **30.09.86**

(30) Priority: **02.12.85 US 803444**

(43) Date of publication of application:
**23.09.87 Bulletin 87/39**

(84) Designated Contracting States:
**DE FR GB SE**

(71) Applicant: **THE BUDD COMPANY**
**3155 W. Big Beaver Road**
**Troy, MI 48084(US)**

(72) Inventor: **Hannum, Joseph Robert**
**1417 Cortez Road**
**Norristown Pennsylvania(US)**

(74) Representative: **Finck, Dieter et al**
**Patentanwälte v. Füner, Ebbinghaus, Finck**
**Mariahilfplatz 2 & 3**
**D-8000 München 90(DE)**

(54) **Means for connecting a rotatable member on a shaft.**

(57) Means for connecting a rotatable member
(sprocket 20) on a shaft (22) comprise a split bearing
(24) which is fitted around the shaft (22). A pair of
collars (26, 28) at the ends of the bearing (24) force
it into engagement with the shaft (22). The sprocket -
(20) is disposed to rotate on the bearing (24) be-
tween the collars (26, 28).

FIG. 3

## Means for connecting a rotatable member on a shaft

The invention relates to means for connecting a rotatable member on a shaft.

In many systems, rotatable members, such as chain driven sprockets, are rotatable about shafts. Very often the shaft becomes worn as a result of the sprocket rotating on the shaft.

In the case of rectangular clarifiers used in water and sewage treatment systems, the idler sprocket often must be removed from a steel shaft for repair. Also, the shaft often becomes worn as a result of the friction caused by the sprocket rotations. The sprocket and the shaft require replacements. The steel shaft is generally connected to cast iron babbited wall bearings on the side walls of a treatment tank with the connections often becoming corroded by the water and waste products. This makes it extremely difficult to remove for repair, with such removal being time consuming and requiring long "down time" as a repair or replacement is made.

In some systems, one sprocket may be fixed to the shaft while a second is permitted to oscillate as an idler sprocket. When the shaft becomes fixed to the wall bearing as a result of corrosion, the bearing in the fixed sprocket must be removed and, when a bearing is inserted, both sprockets become idlers and are free to rotate on the fixed shaft.

It is an object of this invention to provide means for connecting a rotatable member on a shaft which is long wearing and not subject to corrosion and which permits replacing a sprocket on a fixed shaft without moving the shaft.

In accordance with the present invention the means for connecting a rotatable member on a shaft comprises a sleeve bearing including a pair of split pieces dimensioned to fit around said shaft; a pair of set collar assemblies for connections at the ends of said sleeve bearing to fixedly secure said sleeve bearing to said shaft, and said collar assemblies each including a pair of pieces secured together by adjustment means to force said collar assemblies into engagement with the ends of said sleeve bearing.

Preferably each set collar assembly includes a recess therein to receive one end of said sleeve bearing therein.

Conveniently said pair of split pieces of said sleeve bearing each includes a notch for receiving a key portion disposed in the recesses of said collar assemblies to prevent rotation of said sleeve bearing.

Advantageously screw assemblies are provided to secure said collar assemblies to said shaft.

Usually said rotatable member comprises a sprocket.

In this case said shaft may be fixedly mounted to a structure in a water treatment facility and said sprocket may comprise an idler sprocket in a chain drive system.

It is convenient that said sleeve bearing and collar assemblies comprise plastic materials.

Preferably said sprocket comprises a nylon material, said bearing comprises Nylon-6 and said collar assemblies comprise cast nylon.

So according to the invention bearing means are provided to connect a sprocket to a shaft. The means include a split plastic bearing dimensioned to fit around the shaft. A pair of collar assemblies are fixed to the shaft and connected at the ends of the split bearing. The collar assemblies are adjustable to press the bearing against the shaft and to prevent axial movement to the bearing. The bearing is key fitted to the collar assemblies to prevent rotation of the bearing. The sprocket rotates on the bearing between the collar assemblies.

The present invention provides an improved bearing assembly which eliminates the expense and labor of removing a fixed shaft from its operating position.

It is noted that wearing of a shaft will reduce its outside diameter and that wearing of the interior surface of the sprocket contacting the shaft will include the inside diameter of the central opening in the sprocket. Either situation may be readily compensated for by use of the bearing assembly of the present invention.

Other objects and advantages of the present invention will be apparent and suggest themselves to those skilled in the art, from a reading of the following specification and claims, taken in conjunction with the accompanying drawings.

Fig. 1 is an isometric view of a part of a rectangular clarifier of a water treatment plant, in which the present invention may be used;

Fig. 2 is a cross-sectional view taken along lines 2-2 of Fig. 1;

Fig. 3 is an exploded view illustrating the details of the elements illustrated in Fig. 2;

Fig. 4 is a cross-sectional view taken along lines 4-4 of Fig. 2; and

Fig. 5 is an enlarged view illustrating a key connection of one of the collars to one of the split bearings illustrated in Fig. 3.

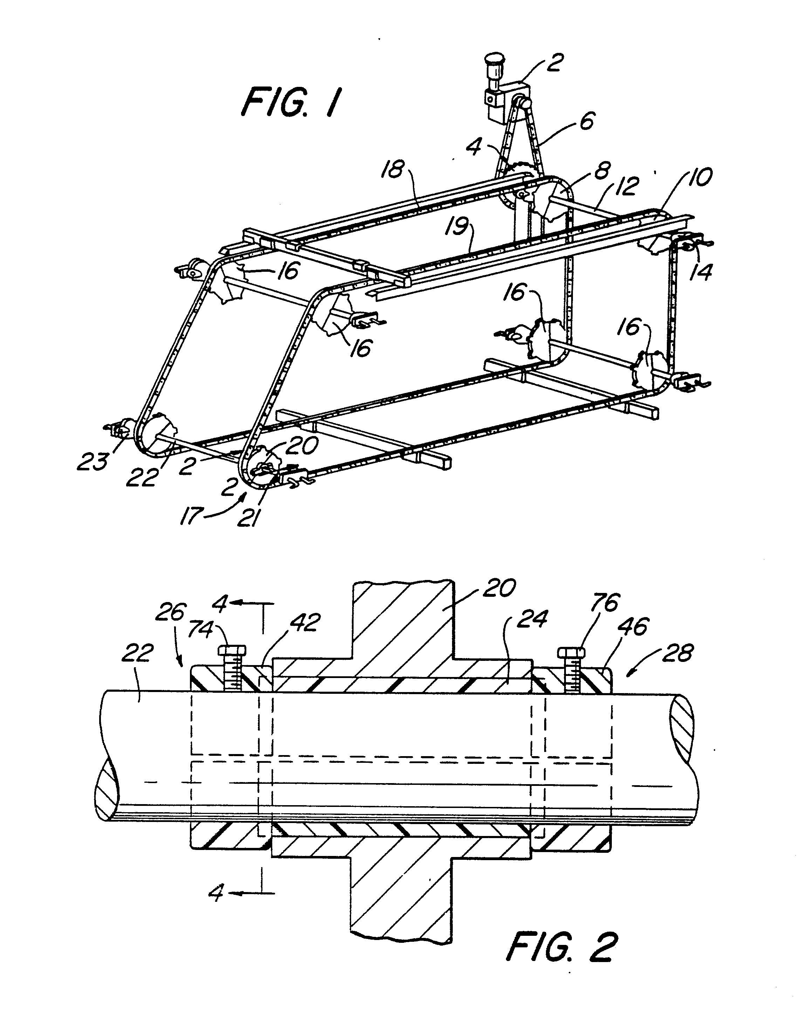

The system illustrated in Fig. 1 shows parts of a typical water and sewage treatment system and is disposed in a rectangular tank including side and end wall with a floor (not illustrated). During operation, the tank is filled with sewage or waste material.

The operating mechanism comprises a motor drive unit with shear pin sprocket assembly 2 for driving a sprocket 4 through a chain 6 and a shaft 12. The shaft is keyed to drive another sprocket 8.

The shaft 12 drives a sprocket 10. The shaft 12 rotates on a pair of wall bearings, of which only one 14 is illustrated. The wall bearings are secured to side walls by anchors or other suitable means. Idler sprockets 16 are driven by chains 18 and 19.

The present invention is directed to a bearing assembly 17 on a shaft 22 for receiving a rotatable sprocket 20. Normally, the bearing assembly will be used as a repair or replacement item when excessive wear of the shaft 22 is involved or the sprocket 20 needs replacement. Consequently, the invention will be described in connection with a sprocket 20 rotatable about the shaft 22. The shaft 22 is secured to wall bearings 21 and 23, which in turn are secured to side walls in a tank. Assume a condition where the shaft 22 is worn and corroded to the wall bearings and a new bearing assembly 17 is installed in the system to provide the necessary repair.

The repair, for example, could be a situation where the sprocket is normally driven by the shaft. In effect, the driven shaft may be changed to an idler sprocket to avoid expensive removal of the shaft. Of course, the bearing assembly of the present invention is not limited to a particular set of circumstances, but is useful in many different situations.

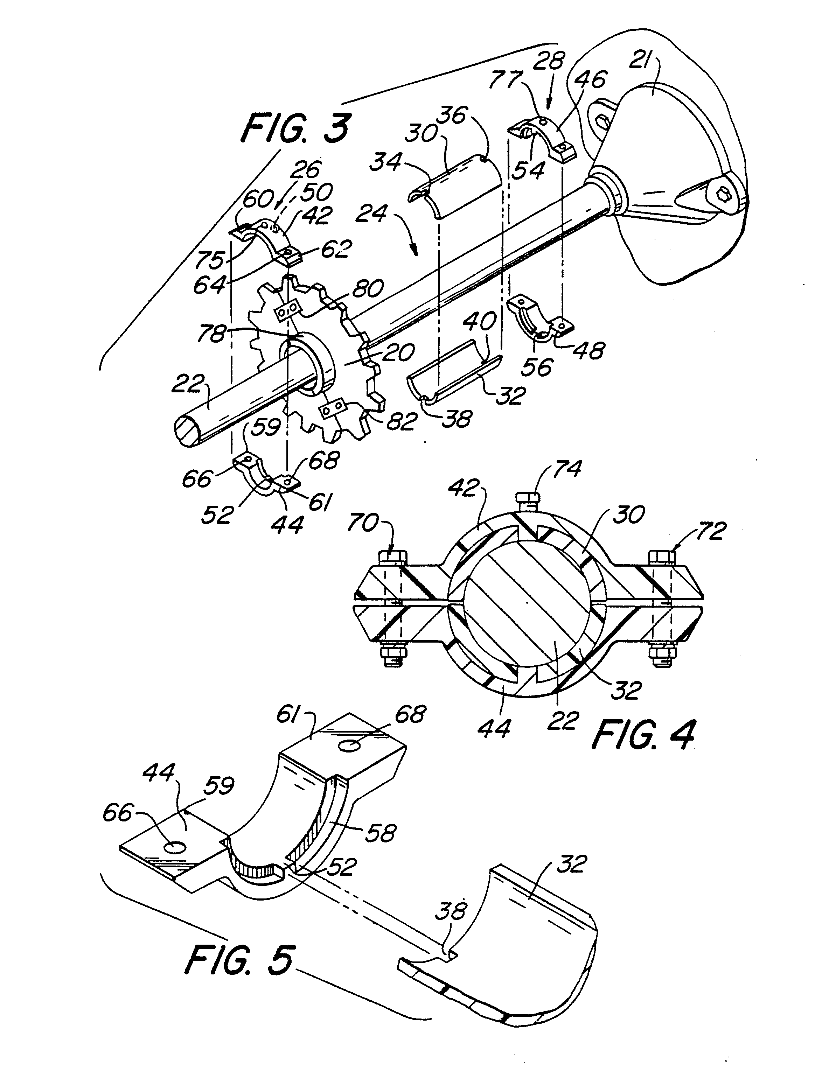

Referring to Figs. 2 and 5, means for connecting the sprocket 20 to the shaft 2 includes a split bearing 24 and a pair of collar assemblies 26 and 28.

As illustrated in Fig. 3, the split bearing 24 comprises two half pieces 30 and 32 dimensioned to fit over the shaft 22. The piece 30 includes notches 34 and 36 and the piece 32 includes notches 38 and 40 disposed to receive key portions in the collar assemblies 26 and 28.

The collar assembly 26 includes a pair of pieces 42 and 44 and the collar assembly 28 includes pieces 46 and 48. The pieces 42, 44, 46 and 48 include key portions 50, 52, 54 and 56, respectively. The key portions 50, 52, 54, and 56 are disposed within recessed areas in the pieces 42, 44, 46 and 48. One such recessed area 58 is illustrated in Fig. 5.

As illustrated in Fig. 2, the ends of the split bearing 24 are received within the recessed areas of the collar assemblies 26 and 28. The key portions 50, 52, 54, and 56 of the collar assemblies 26 and 28 fit into the notches 34, 36, 38 and 40, respectively, of the pieces of the split bearing 24 to maintain the relative positions of the collars with respect to the bearing and to prevent rotation of the bearing 24 on the shaft 22.

The pieces 42, 44 and pieces 46, 48 are attached together in similar manners, as illustrated in Fig. 4. The piece 42 includes extending flanges or sections 60 and 62 having side openings therein only one of which, opening 64, is illustrated. Likewise, the piece 44 includes extending flanges or sections 59 and 61 having openings 66 and 68.

Screw and nut assemblies 70 and 72 extend through the openings in all the pieces 42, 44, 46 and 48, such as openings 64, 66 and 68. The assemblies 70 and 72 are tightened to bring the collar pieces together and force the bearing pieces 30 and 32 in firm engagements with the shaft 22. As illustrated in Fig. 2, set screws 74 and 76 extend through threaded openings in pieces 42 and 46 to maintain the collars in firm engagement with the shaft 22. The collar assemblies 26 and 28, when secured in place, prevent axial movement of the split bearing 24. The key and notch arrangement prevent relative rotational movement between the bearing and the collars. The set screw 74 extends through an opening 75 (Fig. 3) in the upper piece 42. The piece 46 includes an opening 77 for receiving set screw 76.

The sprocket 20 is free to rotate on the split bearing 24. The bearing may be made of a plastic material, such as Cast Nylon-6 or an ultra high molecular weight polyethylene material. The sprocket 20 may be made of nylon. In addition, the arrangement illustrated provides no wear on the shaft. The collars may be made of cast nylon.

The sprocket 20 may comprise two halves joined by connecting bars 80 and 82 or any other suitable means. The sprocket 20 includes a center hub 78 which rides on the split bearing between the two collars.

It is seen that if the sprocket 20 causes excess wear on the shaft 22, or becomes corroded, that it may be removed from the shaft by disconnecting the two halves of the sprocket without the need of disturbing the shaft. A new sprocket with the new bearing means of the present invention may readily be installed. It is not necessary to remove the shaft from the wall bearings 21 and 23 to accomplish the repair.

**Claims**

1. Means for connecting a rotatable member - (20) on a shaft (22) comprising:

(a) a sleeve bearing (24) including a pair of split pieces (30, 32) dimensioned to fit around said shaft (22);

(b) a pair of set collar assemblies (26, 28) for connections at the ends of said sleeve bearing - (24) to fixedly secure said sleeve bearing (24) to said shaft (22), and

(c) said collar assemblies (26, 28) each including a pair of pieces (42, 44; 46, 48) secured together by adjustment means (50, 52, 54, 56; 34, 36, 38, 40) to force said collar assemblies (26, 28) into engagement with the ends of said sleeve bearing (24).

2. Means for connection as set forth in claim 1 wherein each set collar assembly (26, 28) includes a recess (58) therein to receive one end of said sleeve bearing (24) therein.

3. Means for connecting as set forth in claim 2 wherein said pair of split pieces (30, 32) of said sleeve bearing (24) each includes a notch (34, 36, 38, 40) for receiving a key portion (50, 52, 54, 56) disposed in the recesses (58) of said collar assemblies (26, 28) to prevent rotation of said sleeve bearing (24).

4. Means for connecting as set forth in claim 3 wherein screw assemblies (70, 72) are provided to secure said collar assemblies (26, 28) to said shaft (22).

5. Means for connecting as set forth in claim 4 wherein said rotatable member comprises a sprocket (20).

6. Means for connecting as set forth in claim 5 wherein said shaft (22) is fixedly mounted to a structure in a water treatment facility and said sprocket (20) comprises an idler sprocket (16) in a chain drive system (18, 19).

7. Means for connecting as set forth in claim 6 wherein said sleeve bearing (24) and collar assemblies (26, 28) comprise plastic materials.

8. Means for connecting as set forth in claim 7 wherein said sprocket (20) comprises a nylon material, said bearing (24) comprises Nylon-6 and said collar assemblies (26, 28) comprises cast nylon.

EPAC-34219.8

FIG. I

FIG. 2

FIG. 3

FIG. 4

FIG. 5

## DOCUMENTS CONSIDERED TO BE RELEVANT

EP 86113434.4

| Category | Citation of document with indication, where appropriate, of relevant passages | Relevant to claim | CLASSIFICATION OF THE APPLICATION (Int. Cl.4) |
|---|---|---|---|
| A | US - A - 3 139 296 (GREENE) <br> * Column 2, line 37 - column 3, line 16; fig. 1,2 * | 1,4,5 | F 16 D 1/06 <br> F 16 B 21/00 |
| A | US - A - 2 934 803 (A.K. ALLEN) <br> * Column 2, lines 1-44; fig. 1-3 * | 1,2,4, 5 | |
| A | GB - A - 1 046 938 (BENDIX CORP.) <br> * Fig. 1-3 * | 1,4 | |
| A | US - A - 1 560 399 (C.F. PRESTON, SR) <br> * Fig. 1-7 * | 1,4 | |
| A | US - A - 3 830 577 (RAMPE et al.) <br> * Fig. 1,3,4 * | 1,7 | TECHNICAL FIELDS SEARCHED (Int. Cl.4) <br><br> F 16 C 13/00 |
| A | US - A - 1 237 950 (PHILLIPS) <br> * Totality * | 1,4 | F 16 B 21/00 <br> F 16 D 1/00 |
| A | US - A - 1 328 688 (POND) <br> * Totality * | 1-3 | |

The present search report has been drawn up for all claims

| Place of search | Date of completion of the search | Examiner |
|---|---|---|
| VIENNA | 22-06-1987 | ROUSSARIAN |

EPO Form 1503 03 82